# EUROPEAN PATENT APPLICATION

(11) **EP 2 418 616 A1**
(43) Date of publication of application: **15.02.2012**
(21) Application number: 10761600.5
(22) Date of filing: 26.03.2010
(51) Int. Cl.: G06Q 50/00, G06Q 10/00, H04W 4/02

(54) **COMMUNICATION SYSTEM, INFORMATION ANALYZING APPARATUS, AND INFORMATION ANALYZING METHOD**

(30) Priority: 06.04.2009 JP 2009092215
(71) Applicant: NTT DOCOMO, INC., Chiyoda-ku Tokyo 100-6150 (JP)
(72) Inventor: SUZUKI Toshihiro, Tokyo 100-6150 (JP); OKAJIMA Ichiro, Tokyo 100-6150 (JP); KAWAKAMI Hiroshi, Tokyo 100-6150 (JP); JO Manhee, Tokyo 100-6150 (JP); OCHI Daisuke, Tokyo 100-6150 (JP); NAGATA Tomohiro, Tokyo 100-6150 (JP); KOBAYASHI Motonari, Tokyo 100-6150 (JP); OYABU Yuki, Tokyo 100-6150 (JP)
(74) Representative: Viering, Jentschura & Partner
(86) International application number: PCT/JP2010/055404
(87) International publication number: WO 2010/116900

(57) **Abstract**

For easily and quickly collecting data regarding macroscopic population distribution, and easily and quickly obtaining the survey results, an RNC (300) includes: a positioning module (301) that measures a position of a mobile station (100) in response to a given trigger event; an RNC communication controller (302) that transmits location information as information regarding the position of the mobile station (100) that the positioning module (301) measures, identification information as an identifier that makes the mobile station (100) uniquely identifiable; and time information as information regarding a time when the positioning module (301) measures the position of the mobile station (100), to an information analyzing apparatus (600), and the information analyzing apparatus (600) includes: a location calculation module (609) that calculates location information regarding a location in which the mobile station (100) is located at a given time based on the location information, the identification information, and the time information; and an output module (604) that calculates distribution information by integrating the calculated location information and outputs the distribution information thus calculated.

## Description

### Technical Field

The present invention relates to an information analyzing apparatus and an information analyzing method for calculating population distribution and a communication system that is configured to include the information analyzing apparatus.

### Background Art

Conventionally, as a method of collecting data regarding macroscopic population distribution, there is a census that is conducted on a 5-year cycle. This survey requires a series of very laborious activities such as distributing questionnaires to those surveyed, collecting them, and tallying them with many workers, whereby it takes time to obtain the survey results. On those surveyed who respond, this survey also imposes burdens such as filling out and sending the questionnaires.

### Citation List

### Patent Literature

[Patent Literature 1] Japanese Patent Application Laid-Open Publication No. 2003-44969

### Summary of Invention

### Technical Problem

As described above, conventionally, even only collecting data regarding macroscopic population distribution is very troublesome, and thus it is difficult to collect the data easily and quickly and obtain the survey results.

On the other hand, as an attempt to obtain population distribution by using mobile terminals, in the Patent Literature 1 for example, obtaining the distribution of population by using mobile terminals with a GPS function is mentioned. However, even with this technique, in order to obtain population distribution, a processing load and time are necessary for distributing, to all users to be surveyed, GPS built-in devices to which identifiers allowing all the users to be uniquely identifiable are added, collecting location information measured by a GPS from one by one, and the like. Accordingly, a technique of easily and quickly collecting data regarding population distribution and investigating them has been expected.

The present invention, considering the above-mentioned problem, is aimed at easily and quickly collecting data regarding macroscopic population distribution, and easily and quickly obtaining the survey results.

### Solution to Problem

To solve the above-mentioned problem, a communication system according to one aspect of the present invention is configured to include: a mobile station that is located in a sector that a base transceiver station controls; a radio network controller that controls the base transceiver station; and an information analyzing apparatus that is communicably connected with the radio network controller, and the radio network controller includes: a positioning module that measures a position of the mobile station in response to a given trigger event; and a transmitter that transmits location information as information regarding the position of the mobile station that the positioning module measures, identification information as an identifier that makes the mobile station uniquely identifiable, and time information as information regarding a time when the positioning module measures the position of the mobile station, to the information analyzing apparatus, and the information analyzing apparatus includes: a location calculation module that calculates location information regarding a location in which the mobile station is located at a given time based on the location information, the identification information, and the time information; and an output module that calculates distribution information by integrating the calculated location information and outputs the distribution information thus calculated.

With this structure, it is possible to easily and quickly obtain survey results data regarding macroscopic population distribution, by easily and quickly collecting location information of a mobile station and time information when its position is measured and outputting distribution information into which calculated location information is integrated based on the location information and time information.

The positioning module may measure the position of the mobile station using, as the trigger event, at least any one of: when the mobile station transmits; when the mobile station receives a transmission; when the mobile station moves across a boundary of location registration areas which are areas formed by the base transceiver station and are unit areas in which the mobile station registers its own position with the radio network controller; and when a given timing in a given period arrives.

By measuring a position, when the mobile station transmits, the mobile station receives a transmission, and when the mobile station moves across a boundary of location registration areas which are areas formed by the base transceiver station and are unit areas in which the mobile station registers its own position with the radio network controller, it is possible to measure a position while suppressing additional load to various types of communication equipment.

By measuring a position, when a given timing in a given period arrives, it is possible to measure a position at least once in the given period without exception.

The information analyzing apparatus may convert an expression form of the calculated location information that the location calculation module calculates into an expression form for giving expression in association with an area unit having a certain range of spread.

By setting the area unit to a desired unit (for example, an area 100 meters square, an area 10 kilometers square, or an administrative district such as a municipality), it is possible to output distribution information with accuracy responding to requests.

The information analyzing apparatus may further include: an attribute information storage module that stores attribute information representing attributes of a user using the communication system in association with the identification information therein; and an attribute determination module that determines whether or not to use the calculated location information to output the distribution information, based on the attribute information.

With this structure, it is possible to output distribution information by desired attributes.

The information analyzing apparatus may further include an acquisition trigger event determination module that determines whether or not to use the calculated location information to output the distribution information, based on the trigger event for the positioning module to measure the position of the mobile station.

With this structure, it is possible to output distribution information by trigger events for the positioning module to measure the position of the mobile station.

To solve the above-mentioned problem, an information analyzing apparatus according to another aspect of the present invention is an information analyzing apparatus communicably connected with a radio network controller that controls a base transceiver station controlling a sector in which a mobile station is located, and the information analyzing apparatus includes: a receiver that receives location information as information regarding a position of the mobile station that the radio network controller measures in response to a given trigger event, identification information as an identifier that makes the mobile station uniquely identifiable, and time information as information regarding a time when the radio network controller measures the position of the mobile station; a location calculation module that calculates location information regarding a location in which the mobile station is located at a given time based on the location information, the identification information, and the time information; and an output module that calculates distribution information by integrating the calculated location information and outputs the distribution information thus calculated.

With this structure, it is possible to easily and quickly obtain survey results data regarding macroscopic population distribution, by easily and quickly collecting location information of a mobile station and time information when its position is measured and outputting distribution information into which calculated location information is integrated based on the location information and time information.

To solve the above-mentioned problem, an information analyzing method according to another aspect of the present invention is a method executed in a communication system constituted to include: a mobile station that is located in a sector that a base transceiver station controls; a radio network controller that controls the base transceiver station; and an information analyzing apparatus that is communicably connected with the radio network controller, and the information analyzing method includes: a positioning step in which the radio network controller measures a position of the mobile station in response to a given trigger event; a transmitting step in which the radio network controller transmits location information as information regarding the position of the mobile station that is measured at the positioning step, identification information as an identifier that makes the mobile station uniquely identifiable, and time information as information regarding a time when the position of the mobile station is measured at the positioning step, to the information analyzing apparatus; and a location calculating step in which the information analyzing apparatus calculates location information regarding a location in which the mobile station is located at a given time based on the location information, the identification information, and the time information; and an outputting step in which the information analyzing apparatus calculates distribution information by integrating the calculated location information and outputs the distribution information thus calculated.

With this structure, it is possible to easily and quickly obtain survey results data regarding macroscopic population distribution, by easily and quickly collecting location information of a mobile station and time information when its position is measured and outputting distribution information into which calculated location information is integrated based on the location information and time information.

### Advantageous Effects of Invention

According to the present invention, it is possible to easily and quickly (in almost real time) collect data regarding macroscopic population distribution and to easily and quickly obtain survey results.

### Brief Description of Drawings

[Fig. 1] Fig. 1 is a diagram illustrating a system structure of a communication system according to a first embodiment of the present invention.
[Fig. 2] Fig. 2 is a diagram illustrating a functional structure of the communication system depicted in Fig. 1.
[Fig. 3] Fig. 3 is a diagram illustrating a relationship between a BTS depicted in Fig. 2 and sectors.
[Fig. 4] Fig. 4 is a diagram illustrating an example of User ID-PRACH PD GAI corresponding information.
[Fig. 5] Fig. 5 is a diagram for explaining a calculation method of calculated location information.
[Fig. 6] Fig. 6 is a diagram for explaining a sector Voronoi diagram.
[Fig. 7] Fig. 7 is a diagram for explaining a relationship between area units and movement information.
[Fig. 8] Fig. 8 is a diagram for explaining a calculation method of calculated location information.
[Fig. 9] Fig. 9 is a diagram for explaining a calculation method of calculated location information.
[Fig. 10] Fig. 10 is a diagram illustrating an example of attribute information that an attribute information storage module depicted in Fig. 2 stores therein.
[Fig. 11] Fig. 11 is a diagram for explaining a relationship between the attribute information and the area units.
[Fig. 12] Fig. 12 is a diagram illustrating a flow of processes by the communication system depicted in Fig. 2.
[Fig. 13] Fig. 13 is a diagram illustrating a system structure of a communication system according to a second embodiment of the present invention.

### Description of Embodiments

With reference to the attached drawings, embodiments of the present invention will be described. When feasible, same reference signs are given to same parts, and redundant explanations are omitted.

### [First Embodiment]

### [Structure of Communication System]

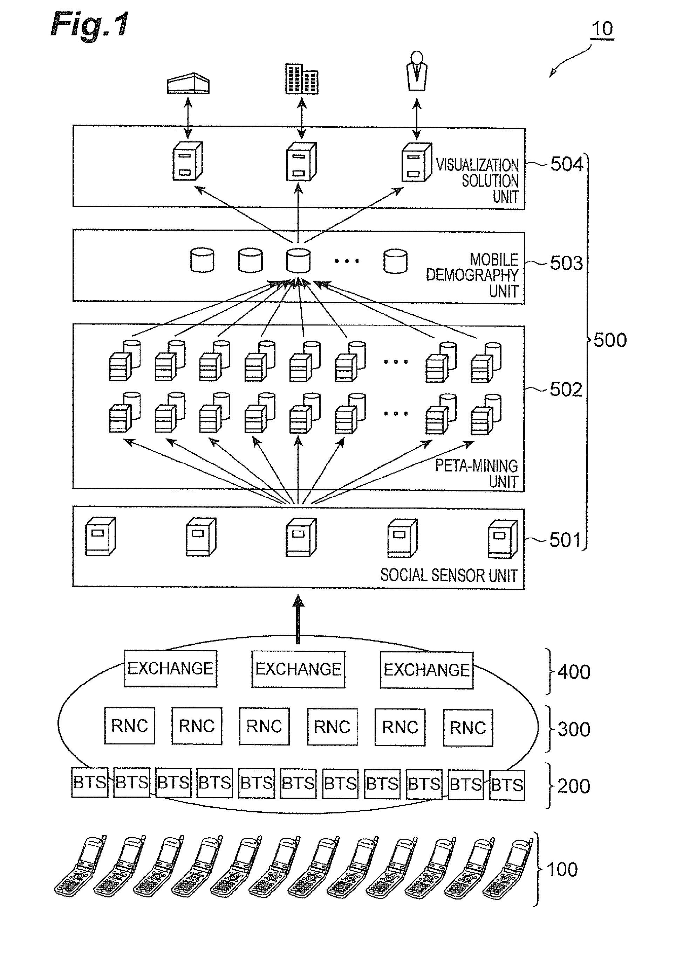

Fig. 1 is a diagram illustrating a system structure of a communication system 10 according to an embodiment of the present invention. As illustrated in Fig. 1, the communication system 10 is configured to include mobile stations 100, base transceiver stations (BTSs) 200, radio network controllers (RNCs) 300, exchanges 400, and a management center 500. The management center 500 is configured to include social sensor units 501, peta-mining units 502, mobile demography units 503, and visualization solution units 504.

The exchange 400 collects location information of the mobile stations 100 via the BTS 200 and the RNC 300. The RNC 300, when communication connection is established with a mobile station 100, can measure a position of the mobile station 100 by using a delay value in an RRC connection request signal. The exchange 400 can receive the location information of the mobile station 100 thus measured when the mobile station 100 establishes communication connection. The exchange 400 stores the location information thus received therein, and outputs the stored location information to the management center 500 at a predetermined timing or in response to a request from the management center 500. In general, there are approximately one thousand RNCs 300 arranged all over Japan. On the other hand, there are approximately three hundred exchanges 400 arranged all over Japan.

The management center 500, as described above, is configured to include the social sensor units 501, the peta-mining units 502, the mobile demography units 503, and the visualization solution units 504 and, in each unit, statistical processes are performed using location information of mobile stations 100.

The social sensor unit 501 is server equipment that collects data including location information of mobile stations 100, from each exchange 400. The social sensor unit 501 is configured to receive data that is outputted periodically from the exchange 400, and to obtain the data from the exchange 400 based on a timing that is predetermined in the social sensor unit 501.

The peta-mining unit 502 is server equipment that converts data received from the social sensor unit 501 into a predetermined data format. For example, the peta-mining unit 502 performs a sorting process by using user IDs as keys or by areas.

The mobile demography unit 503 is server equipment that performs a tallying process for data processed in the peta-mining unit 502, in other words, a counting process for each item. For example, the mobile demography unit 503 can count the number of users located in some area, can tally the number of users to obtain distribution of users, or the like.

The visualization solution unit 504 is server equipment that visualizes data tally-processed in the mobile demography unit 503. For example, the visualization solution unit 504 can perform a mapping of the tallied data onto a map. The data processed in the visualization solution unit 504 is provided to companies, public offices, individuals, or the like, and is used for store development, road traffic research, disaster measures, environmental measures, and the like. However, information thus statistically processed is processed so as not to violate privacy so that individuals or the like cannot be identified.

Each of the social sensor unit 501, the peta-mining unit 502, the mobile demography unit 503, and the visualizing solution unit 504 is configured with server equipment as described above, and their depictions are omitted, but it goes without saying that each of them includes basic components of a conventional information processing apparatus (i.e., a CPU, a RAM, a ROM, input devices such as a keyboard and a mouse, a communication device that communicates with the outside, a storage device that stores information therein, and output devices such as a display and a printer).

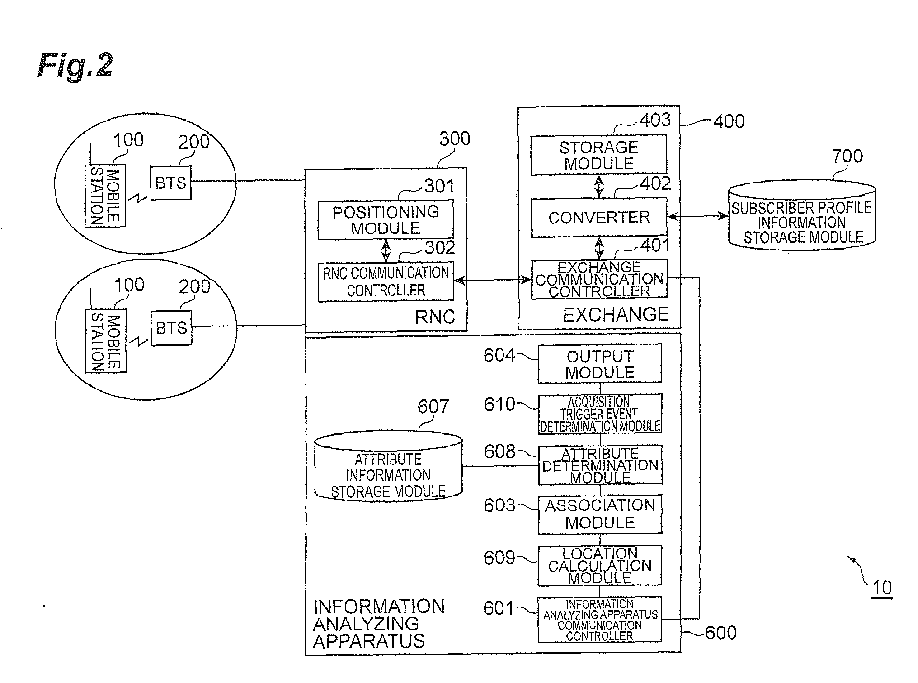

Fig. 2 illustrates a functional structure of the communication system 10. As illustrated in Fig. 2, the communication system 10 is configured to include: a plurality of mobile stations 100 located in sectors controlled by a plurality ofBTSs 200; the RNC 300 that controls the BTSs 200; the exchange 400; an information analyzing apparatus 600; and a subscriber profile information storage module 700. The information analyzing apparatus 600 corresponds to the mobile demography unit 503 and the visualization solution unit 504 depicted in the above-described Fig. 1. With respect to functions corresponding to the social sensor unit 501 and the peta-mining unit 502 in Fig. 1, their depictions are omitted in Fig. 2.

The RNC 300 is configured to include a positioning module 301 and an RNC communication controller (transmitter) 302. The exchange 400 is configured to include an exchange communication controller 401, a converter 402, and a storage module 403.

The information analyzing apparatus 600 is configured to include an information analyzing apparatus communication controller (receiver) 601, an association module 603, an output module 604, an attribute information storage module 607, an attribute determination module 608, a location calculation module 609, and an acquisition trigger event determination module 610.

The RNC 300 will be described first. The positioning module 301 is a component that, when the later-described RNC communication controller 302 establishes communication connection with a mobile station 100 via the BTS 200, measures a position (coordinates) in a sector in a BTS where the mobile station 100 is located, based on a delay value generated in a process using an RRC connection request signal. The RNC 300 can measure a position in a sector by performing what is called PRACH PD positioning calculation. A sector herein means one of a plurality of areas into which a communication area controlled by a BTS 200 is equally divided. It is acceptable to measure center coordinates of a sector where a mobile station is located as coordinates at which the mobile station 100 lies, without performing the above-mentioned PRACH PD positioning according to communication environment.

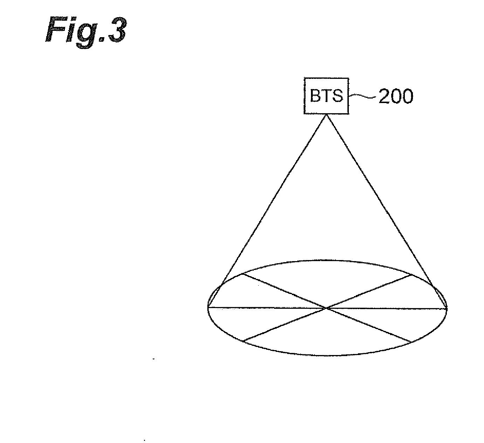

Fig. 3 is a diagram illustrating a relationship between a BTS 200 and sectors. The BTS 200 lies in the center of an area depicted by a circle, and a plurality of pieces into which the area is equally divided by the BTS 200 as a center are sectors. For example, in Fig. 3, a communication area of the BTS 200 consists of at most six sectors, and the RNC 300 can grasp in which sector a mobile station 100 is located via the BTS 200. In the present embodiment, it is also possible to calculate at which location in a sector a mobile station 100 is located and its geographical area ID (GAI) based on a delay of signals obtained when performing a process of RRC connection request. A sector identifier is allocated to each sector, making it possible to locate the position of the mobile station 100 based on its sector identifier and the location in the sector. When not performing the PRACH PD positioning according to the above-mentioned environment, it is acceptable to use the above-measured center coordinates of the sector where the mobile station 100 is located, as a GAI.

The RNC communication controller 302 is a component that establishes communication connection with a mobile station 100 via a BTS 200 and, for example, performs communication connection processing based on a transmission process from the mobile station 100 and communication connection processing based on a location registration request. In the present embodiment, furthermore, the RNC communication controller 302 can add location information of a mobile station 100 to an Initial UE Message used for communication connection processing to transmit the Initial UE Message to the exchange 400. This Initial UE Message includes instruction information indicating transmission or a location registration request, an ID such as a temporary ID for uniquely identifying a mobile station 100, and location information. A temporary ID is ID information delivered by the exchange 400 when a mobile station 100 connects with a network.

The exchange 400 will be described hereinafter. The exchange communication controller 401 is a component that receives an Initial UE Message transmitted from the RNC 300 and performs communication connection processing using this Initial UE Message.

The converter 402 is a component that converts an ID such as a temporary ID included in the Initial UE Message received by the exchange communication controller 401, into a telephone number. The converter 402, in a converting process, extracts a telephone number related to an ID such as a temporary ID from a subscriber profile information storage module 700 storing subscriber profile information therein to convert the ID into the telephone number thus extracted. This subscriber profile information storage module is provided to a home location register (HLR), for example, and manages and stores therein IDs such as temporary IDs in association with telephone numbers.

The storage module 403 is a component that stores therein telephone numbers converted by the converter 402, location information of mobile station 100 included in an Initial UE Message, and the time when the location information is measured, in association with one another. The location information stored in the storage module 403, in accordance with a transmission process performed by the exchange communication controller 401, is collected, at a predetermined timing described later or in response to a request from the management center 500.

The exchange communication controller 401 transmits telephone numbers (i.e. identification information as identifiers that make mobile stations 100 uniquely identifiable) that the storage module 403 stores therein, location information, and time information as times when the location information is measured, to the information analyzing apparatus 600.

The information analyzing apparatus 600 will be described hereinafter. The information analyzing apparatus communication controller 601 is a component that receives the telephone numbers, the location information and the time information that the exchange 400 transmits.

The location calculation module 609 is a component that inputs the telephone numbers, the location information and the time information from the information analyzing apparatus communication controller 601, and outputs calculated location information regarding locations in which mobile stations 100 is located at a given time.

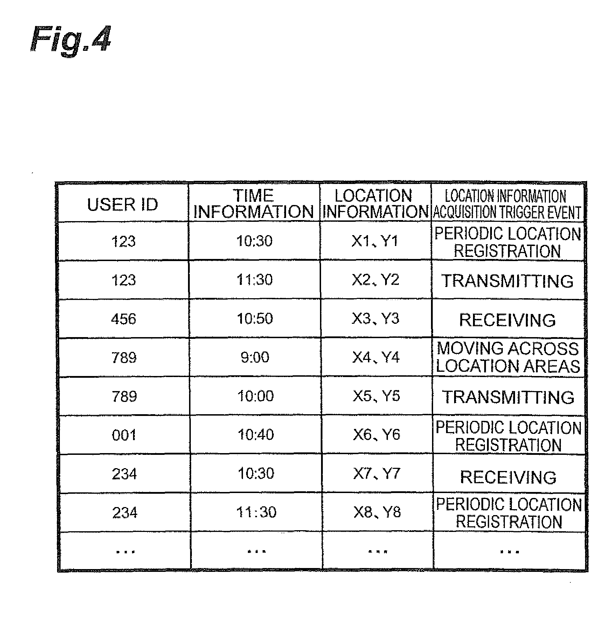

Referring to Figs. 4 to 7 and Fig. 9, a method by which the location calculation module 609 calculates location information will be described below.

Fig. 4 illustrates an example of information that the location calculation module 609 uses. As illustrated in the Fig. 4, the information used by the location calculation module 609 is information in which time information, location information and a location information acquisition trigger event are related to a user ID (hereinafter, this information may be referred to as "User ID-PRACH PD GAI corresponding information").

With respect to a "User ID", the location calculation module 609, by referring to storing means (not depicted) in which user IDs associated with telephone numbers are stored, obtains a user ID that is associated with a telephone number input from the information analyzing apparatus communication controller 601.

The "time information" is information regarding a time when the positioning module 301 measures location information. The "location information" is information regarding the position of a mobile station 100 that is measured by performing what is called PRACH PD positioning calculation according to the above-mentioned method, or information regarding center coordinates of a sector in which a mobile station 100 is located. It is acceptable to express the location information in latitude and longitude. Alternatively, it is acceptable to set a reference point to indicate it in relative position from the reference point.

The "location information acquisition trigger event" is information regarding a type of a trigger event when location information of a mobile station 100 is measured. The trigger event may be at least one of (1) when a given timing in a given period (for example, approximately a one-hour period) arrives, (2) when transmitting and receiving, and (3) when the mobile station 100 moves across a boundary of location registration areas. However, the trigger event for measuring a position is not limited to these, and it is possible to set a desired trigger event.

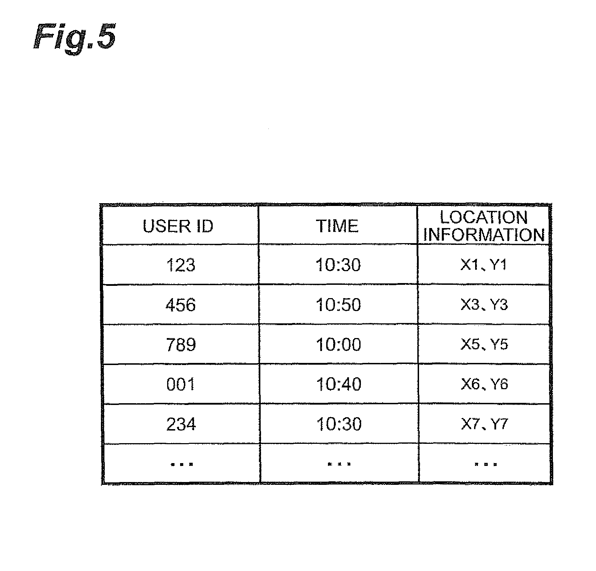

Assume here a case of desiring to obtain population distribution at 11 o'clock. In this case, the location calculation module 609 selects information in which "time information" is just before 11:00 (i.e., a time before 11:00 and closest to 11:00) out of information indicated in Fig. 4 by user IDs. An example of information selected is illustrated in Fig. 5. For example, for a mobile station 100 that a user whose user ID is "123" has, its position was measured at 10:30 and at 11:30. In this case, information measured at 10:30 before the desired time (11:00 in this example) is selected. The location calculation module 609 selects information measured just before the desired time similarly for each of the other users.

The location calculation module 609 can use information that is selected by the above-mentioned method and in which the position was measured just before the desired time (11:00), as calculated location information.

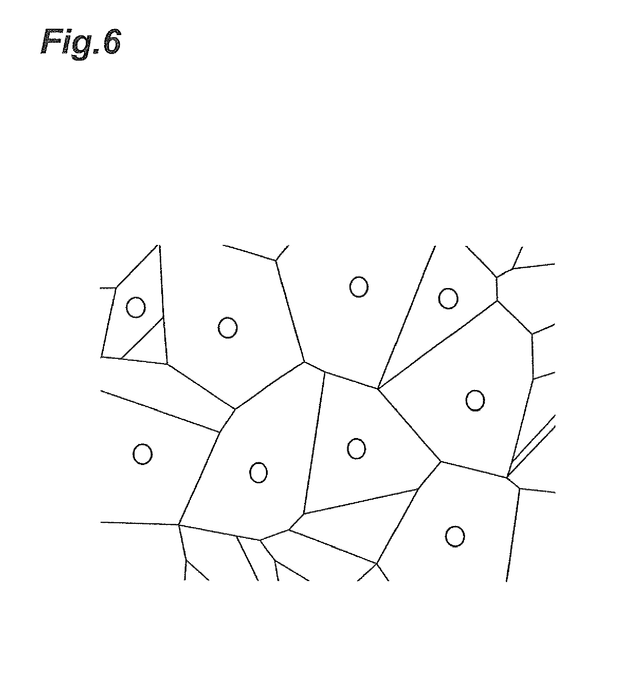

Referring back to Fig. 2, the association module 603 is a component that converts the expression form of the calculated location information that the location calculation module 609 calculates into an expression form for giving expression in association with a desired area unit having a certain range of spread. The desired area unit may be in a mesh pattern. Alternatively, it is acceptable to set an administrative district such as a municipality as the area unit. Or, it is acceptable to use a Voronoi diagram exemplarily illustrated in Fig. 6.

In Fig. 6, positions indicated by open circles represent center latitudes/longitudes of sectors. As illustrated in this drawing, a Voronoi diagram is a diagram in which sectors are divided with bisectors between center latitudes/longitudes of adjacent sectors one another. Furthermore, if there is corresponding information of sectors and locations, for example, a map of power distribution for each sector (a service area map) is available, it is acceptable to use this.

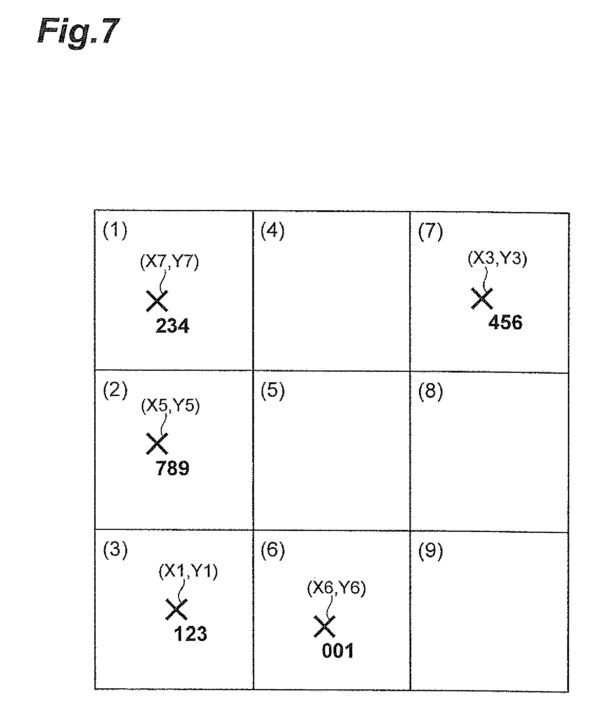

Fig. 7 is a diagram for explaining a method by which the association module 603 converts the expression form of calculated location information into an expression form for giving expression in association with a desired area unit having a certain range of spread. As an example of a desired area unit, a square grid is used herein. In Fig. 7, an area unit identifier that makes each square uniquely identifiable is written in parentheses on the upper left of each square. When the position of a mobile station 100 is calculated as one certain point (in the present description, represented as (X1,Y1), etc.), one corresponding area unit is identified. In this embodiment, for example, calculated location information of a user whose user ID is "123" is expressed as (X1, Y1), and the corresponding area unit is expressed with the area unit identifier being (3).

Another method by which the location calculation module 609 calculates calculated location information will be described hereinafter, referring to Fig. 4 and Figs. 7 to 9.

In the above-mentioned method, for a user whose user ID is "234", calculated location information is calculated to be (X7, Y7) based on information measured at 10:30 (i.e., information measured just before 11:00 that is the desired time).

In another method, because the position of the user whose user ID is "234" was measured also at 11:30 after 10:30, by using these two pieces of information (i.e., information measured just before the desired time and information measured just after the desired time), the location calculation module 609 calculates the location at 11:00.

In this case, assuming that the user moved straight at the same speed between the times just before and just after 11:00 that is the desired time, by proportionally dividing the time information and the location information of just before and just after, the location calculation module 609 calculates the location in which the user was present at the desired time as the location information.

For example, for the user whose user ID is "234", provided that calculated location information at the desired time (11:00) is (X9, Y9), the location calculation module 609 calculates calculated location information according to the equations "X9=(X7+X8)/2" and "Y9=(Y7+Y8)/2".

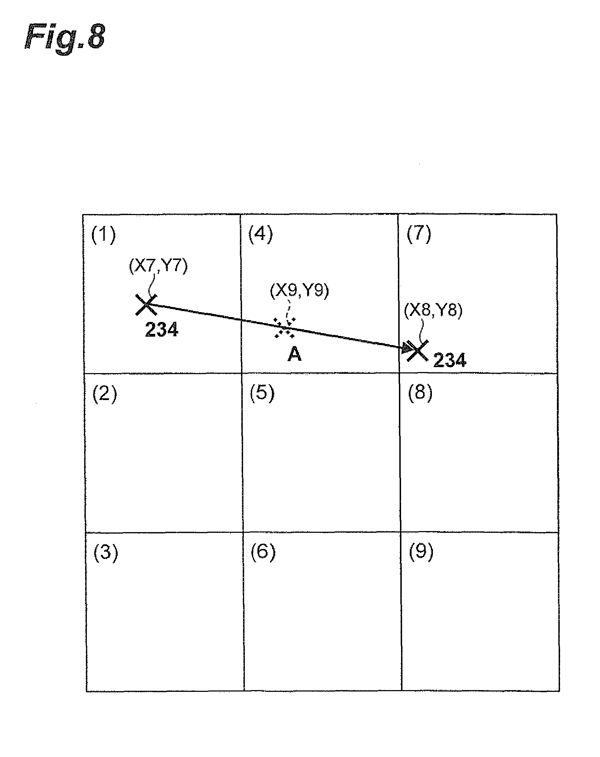

The association module 603 converts this into an expression form for giving expression in association with an area unit, resulting as illustrated in Fig. 8. The relationship among (X8,Y8) being location information at 11:30, (X7,Y7) being location information at 10:30, and the calculated location information (X9,Y9) that the location calculation module 609 calculates is such that they are in alignment as depicted in Fig. 8 and are locations whose corresponding time information and location information are proportionally divided (in this example, (X9,Y9) is a midpoint of (X7,Y7) and (X8,Y8)).

In this case, the association module 603 determines that the location at 11:00 being the desired time for the user whose user ID is "234" is an area unit represented with the area unit identifier (4) (note that in the case of using only location information measured just before the desired time mentioned above, the area unit identifier was determined to be (1). Refer to Fig. 5 and Fig. 7).

As described above, by this method, it is possible to calculate more realistic and accurate calculated location information.

Still another method by which the location calculation module 609 calculates calculated location information will be described hereinafter. In the above-mentioned another method, information measured just before the desired time and information measured just after the desired time are used, but in the still another method, a plurality of pieces information measured just before that are used.

Referring to Fig. 4, a user whose user ID is "789" will be described as an example. As for the user whose user ID is "789", the position of the user was measured at 9:00 (X4,Y4) and at 10:00 (X5,Y5). From the location information measured twice, the location calculation module 609 calculates calculated location information at the desired time (11:00) assuming that he/she subsequently moved at the same speed.

For the user whose user ID is "789", provided that calculated location information at the desired time (11:00) is (X10,Y10), the location calculation module 609 calculates calculated location information according to the equations "X10=(X5-X4)+X5" and "Y10=(Y5-Y4)+Y5".

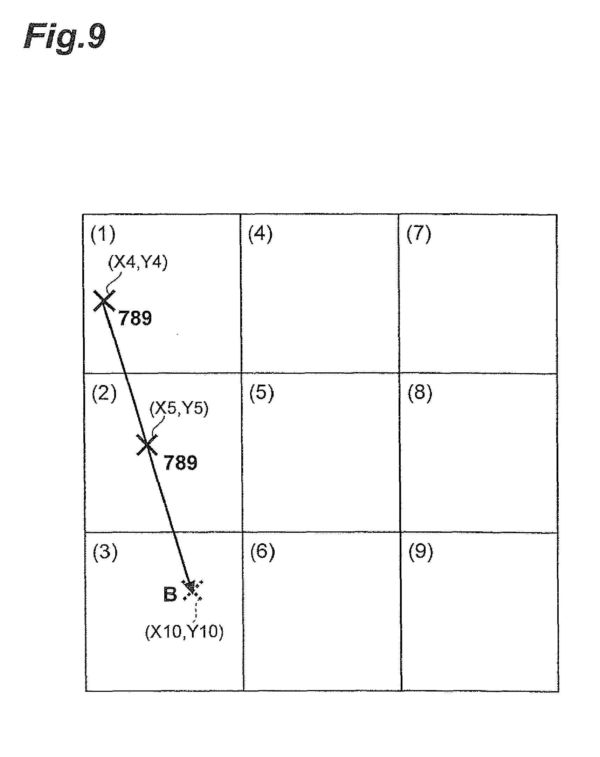

The association module 603 converts this into an expression form for giving expression in association with an area unit, resulting as illustrated in Fig. 9. As depicted in Fig. 9, when (X4,Y4) that is the measured location of the user whose user ID is "789" at 9:00 and (X5,Y5) that is the measured location thereof at 10:00 are as depicted in Fig. 9, (X10,Y10) that the location calculation module 609 calculates by the above-mentioned method will be the location to which a straight line drawn from (X4,Y4) to (X5,Y5) is extended in the same way by a distance between (X4,Y4) and (X5,Y5) as indicated with B in Fig. 9.

In this case, the association module 603 determines that the location at 11:00 being the desired time for the user whose user ID is "789" is an area unit represented with the area unit identifier (3) (note that in the case of using only location information measured just before the desired time mentioned above, the area unit identifier was determined to be (2). Refer to Fig. 5 and Fig. 7).

As described above, by this method, it is possible to calculate more realistic and accurate calculated location information.

A method by which the location calculation module 609 calculates location information is not limited to the above-mentioned examples. Other than these, for example, it is acceptable to consider the movement of the previous day in the same time period. In the above-mentioned method, calculation is performed by proportional division assuming that a user moves straight at the same speed, but it is acceptable to consider routes such as roads.

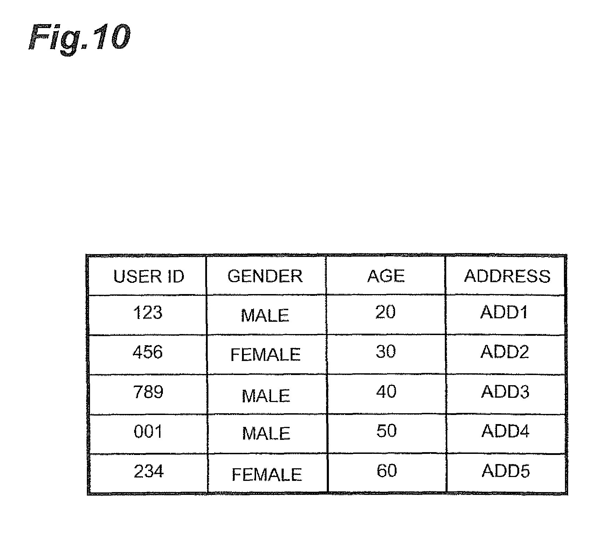

Referring back to Fig. 2, the attribute information storage module 607 is a component that stores therein attribute information of users of mobile stations 100 in association with user IDs. Fig. 10 illustrates an example of attribute information that the attribute information storage module 607. As illustrated in Fig. 10, attribute information may include genders, ages, and addresses.

The attribute determination module 608 is a component that determines, based on attribute information that the attribute information storage module 607 stores therein, whether or not to use distribution information (that is obtained by integrating calculated location information) described later, for outputting.

More specifically, the attribute determination module 608 determines whether or not a desired attribute satisfies a certain requirement by referring to the attribute information that the attribute information storage module 607 stores therein. When determining that it satisfies the certain requirement, the attribute determination module 608 determines to use the corresponding calculated location information to output the distribution information described later. When determining that it does not satisfy the certain requirement, the attribute determination module 608 determines not to use the corresponding calculated location information to output the distribution information described later.

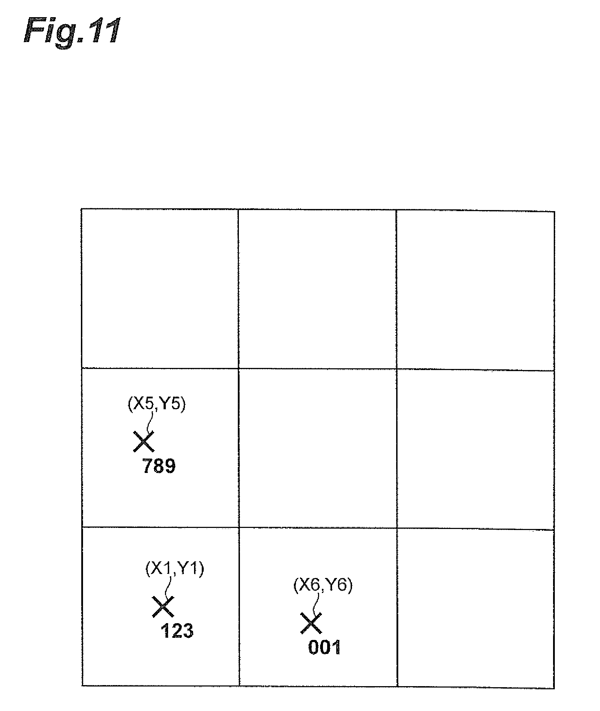

Fig. 11 illustrates an example of the case of using calculated location information in which an attribute "gender" (a desired attribute) is "male" (i.e. satisfying a certain requirement). It is possible to set the desired attribute and the certain requirement freely.

For example, it is acceptable to set the attribute as "age" and to set the certain requirement as "equal to or more than 10 years old and less than 30 years old". Or, it is acceptable to set the attribute as "address" and set the certain requirement as "Chiyoda-ward".

The acquisition trigger event determination module 610 is a component that determines whether or not to use location information to output the distribution information described later based on location information acquisition trigger events.

More specifically, the acquisition trigger event determination module 610 refers to the location information acquisition trigger event depicted in Fig. 4 and determines whether or not it is a desired trigger event. When determining that it is the desired trigger event, the acquisition trigger event determination module 610 determines to use the corresponding calculated location information to output the distribution information described later. When determining that it is not the desired trigger event, the acquisition trigger event determination module 610 determines not to use the corresponding calculated location information to output the distribution information described later.

A desired trigger event is freely settable. When a plurality of desired trigger events are set and it falls under any trigger event of these trigger events, the acquisition trigger event determination module 610 may determine to use the corresponding calculated location information to output the distribution information described later.

The information analyzing apparatus 600 includes the acquisition trigger event determination module 610, accordingly making it possible to obtain distribution information corresponding to a location information acquisition trigger event. For example, when it is known that there is distribution bias in location information in which moving across areas is its location information acquisition trigger event, by setting only a trigger event other than the trigger event of moving across areas as a desired trigger event, it is possible to exclude location information in which it is known that there is bias.

The output module 604 is a component that, by integrating calculated location information that is determined to be used to output distribution information by the attribute determination module 608 and is determined to be used to output distribution information by the acquisition trigger event determination module 610, calculates distribution information and outputs the distribution information thus calculated.

More specifically, the output module 604, by tallying (summing up) the number of calculated location information that is determined to be used to output distribution information by the attribute determination module 608 and is determined to be used to output distribution information by the acquisition trigger event determination module 610 for each area unit that is associated by the association module 603, calculates distribution information for each area unit.

In the present embodiment, the output module 604 integrates the calculated location information that is determined to be used to output distribution information by the attribute determination module 608 and is determined to be used to output distribution information by the acquisition trigger event determination module 610, but it is not limited to this. For example, it is acceptable to omit determination by the attribute determination module 608. Alternatively, it is acceptable to omit determination by the acquisition trigger event determination module 610. Furthermore, it is acceptable to omit both determination by the attribute determination module 608 and determination by the acquisition trigger event determination module 610.

In the present embodiment, after calculated location information is calculated by the location calculation module 609, the attribute determination module 608 and the acquisition trigger event determination module 610 performs the above-mentioned determination, but the order may be reversed.

It goes without saying that the term "output" herein widely includes display output and print output. In other words, population distribution information may be displayed on a display or the like, may be printed out from a printer or the like, or may be output both in display and in print.

As for the output method, specifically, it is acceptable to express population distribution with colors. It is also acceptable to write down numerals.

### [Flow of Process Performed in Communication System]

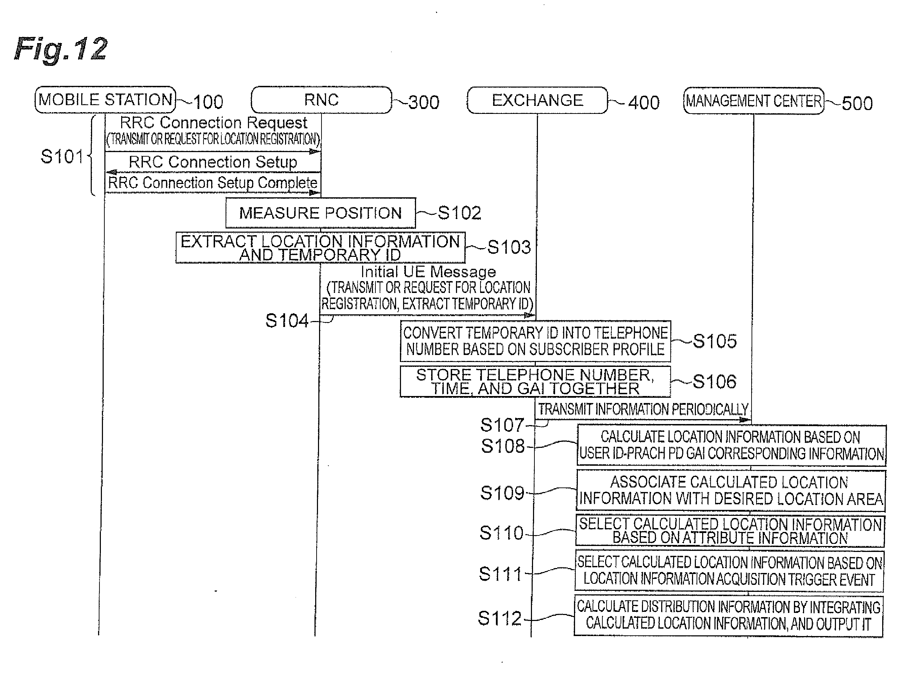

Processes of the communication system 10 thus structured will be described hereinafter referring to Fig. 12.

When a transmission request or a location registration request is outputted from a mobile station 100, in the RNC 300, in accordance with these requests, the position measurement of the mobile station 100 is performed (step S101). In other words, when an RRC connection request is received by the RNC 300 (the RNC communication controller 302), by the RNC communication controller 302, an RRC connection setup is transmitted to the mobile station 100. A completion signal of the RRC connection setup from the mobile station 100 is received by the RNC communication controller 302 (step S101). Based on a delay value of the signal obtained herein, approximate location information in a sector of the mobile station 100 is calculated by the positioning module 301, and position measurement is performed (step S102: positioning step).

In the RNC 300, by the RNC communication controller 302, location information of the mobile station 100 and its temporary ID are extracted (step S103). By the RNC communication controller 302, the location information and the temporary ID extracted are added to an Initial UE Message and sent to the exchange 400 (step S104: transmitting step).

In the exchange 400, by the exchange communication controller 401, an Initial UE Message is received, and the temporary ID included in the Initial UE Message is converted into a telephone number of the mobile station 100 by the converter 402 (step S105). In the storage module 403, the telephone number thus converted, time information as the time when the position is measured, and the location information are stored in association with one another (step S106).

The telephone number, the time information, and the location information stored in the storage module 403 are periodically transmitted to the management center 500, or are obtained in accordance with a request from the management center 500 (step S107).

More specifically, the management center, using as a trigger event at least any one of (1) when a given timing in a given period (for example, approximately a one-hour period) arrives, (2) when transmitting and receiving, and (3) when the mobile station 100 moves across a boundary of location registration areas, obtains the time information and the location information.

The management center 500, based on the User ID-PRACH PD GAI corresponding information, by users, calculates location information that is information regarding a location where the mobile station 100 could exist at a desired time (step S108: location calculating step).

The management center 500 converts the expression form of the calculated location information calculated at step S108 into an expression form for giving expression in association with an area unit having a certain range of spread (step S109).

The management center 500 determines whether or not to use the calculated location information to output distribution information based on attribute information, and selects only calculated location information that is determined to be used (step S110).

The management center 500 determines whether or not to use the calculated location information to output distribution information based on a location information trigger event, and selects only calculated location information that is determined to be used (step S111),

The management center 500 calculates distribution information by integrating the calculated location information, and outputs the distribution information thus calculated for companies, public offices, individuals, or the like (step S112: outputting step).

### [Operation and Effect]

An operation and an effect of the communication system 10 of the present embodiment will be described hereinafter.

With the communication system 10 of the present embodiment, by easily and quickly collecting information regarding location information of mobile stations 100 and information regarding times when their positions were measured and outputting distribution information into which calculated location information of the mobile stations 100 are integrated based on these information, it is possible to easily and quickly obtain survey results data regarding macroscopic population distribution.

The positioning module 301 measures a position of the mobile station 100, by using, as triggering events, when a mobile station 100 transmits, when a mobile station 100 receives a communication, and when a mobile station 100 moves across a boundary of location registration areas which are areas formed by the BTS 200 and are unit areas in which the mobile station 100 registers its own position with the RNC 300. Accordingly, it is possible to perform position measurement while suppressing additional load to various types of communication equipment.

The positioning module 301 measures a position of a mobile station 100, by using, as a trigger event, when a given timing in a given period arrives. Accordingly, it is possible to measure a position at least once in the given period without exception.

The information analyzing apparatus 600 converts the expression form of the calculated location information that the location calculation module 609 calculates into an expression form for giving expression in association with an area unit having a certain range of spread. By setting the area unit to a desired unit (for example, an area 100 meters square, an area 10 kilometers square, or an administrative district such as a municipality), it is possible to output distribution information with accuracy responding to requests.

The information analyzing apparatus 600 further includes the attribute information storage module 607 that stores therein attribute information representing attributes of a user using the communication system 10 in association with identification information, and an attribute determination module 608 that determines whether or not to use the calculated location information to output the distribution information based on the attribute information. Accordingly, it is possible to output distribution information by desired attributes.

The information analyzing apparatus 600 further includes the acquisition trigger event determination module 610 that determines whether or not to use the calculated location information to output the distribution information based on a trigger event for the positioning module 301 to measure the position of the mobile station 100. Accordingly, it is possible to output distribution information by trigger events for the positioning module 301 to measure the position of the mobile station 100.

### [Second Embodiment]

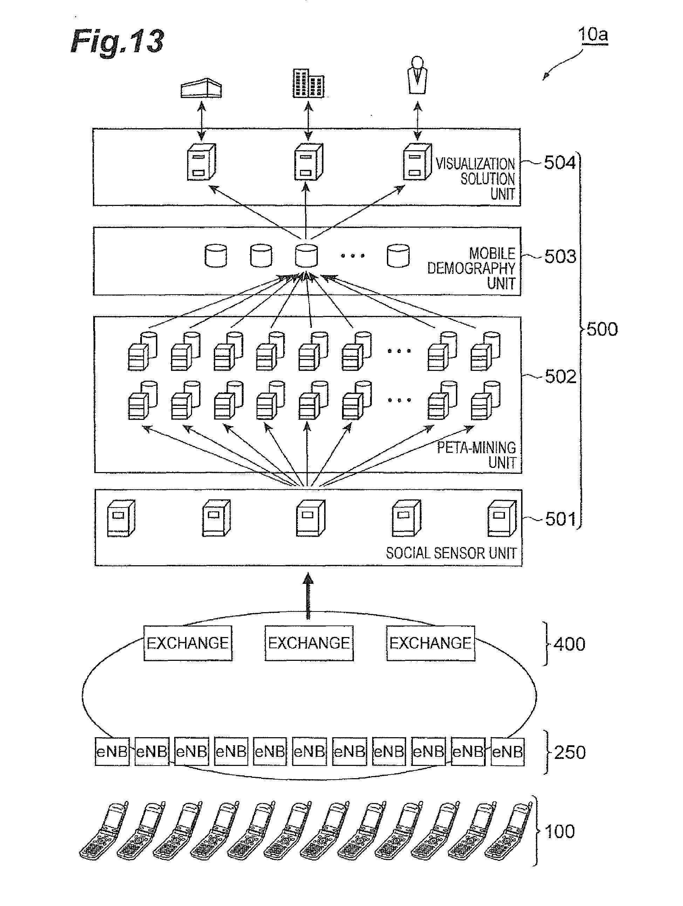

Fig. 13 is a system structure diagram of a communication system 10a according to a second embodiment of the present invention. As illustrated in Fig. 13, this communication system 10a has a system structure for the case of applying it to Long Term Evolution (LTE) that is a new communication standard, and is configured to include mobile stations 100, Evolution Node Bs (eNBs) 250, exchanges 400, and a management center 500. The management center 500 is configured with social sensor units 501, peta-mining units 502, mobile demography units 503, and visualization solution units 504. The eNB 250 includes both functions of the BTS 200 and the RNC 300.

The second embodiment is a system structure for the case of applying it to LTE and the contents of its specific processes are the same as those of the above-mentioned first embodiment, and accordingly its specific description is omitted. In the first embodiment, its protocol is Radio Access Network Application Part (RANAP). In the second embodiment, S1 Application Protocol (S1AP) used for LTE is used and, with respect to the Initial UE Message, the same signals are used for S1AP.

In the first embodiment and the second embodiment, descriptions are made assuming the third-generation cellular phone (3G) system, but these are applicable to Global System for Mobile Communications (GSM).

### Industrial Applicability

According to the present invention, it is possible to easily and quickly (in almost real time) collect data regarding macroscopic population distribution and obtain survey results.

### Reference Signs List

10, 10a... communication system, 100... mobile station, 200... BTS, 250... eNB, 300... RNC, 301... positioning module, 302... RNC communication controller, 400... exchange ,401... exchange communication controller, 402... converter, 403... storage module, 500... management center, 501... social sensor unit, 502... peta-mining unit, 503... mobile demography unit, 504... visualization solution unit, 600... information analyzing apparatus, 601... information analyzing apparatus communication controller, 603... association module, 604... output module, 607... attribute information storage module, 608... attribute determination module, 609... location calculation module, 610... acquisition trigger event determination module, 700... subscriber profile information storage module

## Claims

1. A communication system configured to comprise:
a mobile station that is located in a sector that a base transceiver station controls;
a radio network controller that controls the base transceiver station; and
an information analyzing apparatus that is communicably connected with the radio network controller,
wherein the radio network controller comprises:
a positioning module that measures a position of the mobile station in response to a given trigger event, and
a transmitter that transmits location information as information regarding the position of the mobile station that the positioning module measures, identification information as an identifier that makes the mobile station uniquely identifiable, and time information as information regarding a time when the positioning module measures the position of the mobile station, to the information analyzing apparatus,
wherein the information analyzing apparatus comprises:
a location calculation module that calculates location information regarding a location in which the mobile station is located at a given time based on the location information, the identification information, and the time information; and
an output module that calculates distribution information by integrating the calculated location information and outputs the distribution information thus calculated.

2. The communication system according to claim 1,
wherein the positioning module measures the position of the mobile station using, as the trigger event, at least any one of
when the mobile station transmits,
when the mobile station receives a transmission,
when the mobile station moves across a boundary of location registration areas which are areas formed by the base transceiver station and are unit areas in which the mobile station registers a position thereof with the radio network controller, and
when a given timing in a given period arrives.

3. The communication system according to claim 1 or 2,
wherein the information analyzing apparatus further comprises an association module that converts an expression form of the calculated location information that the location calculation module calculates into an expression form for giving expression in association with an area unit having a certain range of spread.

4. The communication system according to any one of claims 1 to 3,
wherein the information analyzing apparatus further comprises:
an attribute information storage module that stores attribute information representing attributes of a user using the communication system in association with the identification information therein; and
an attribute determination module that determines whether or not to use the calculated location information to output the distribution information, based on the attribute information.

5. The communication system according to any one of claims 1 to 4,
wherein the information analyzing apparatus further comprises an acquisition trigger event determination module that determines whether or not to use the calculated location information to output the distribution information, based on the trigger event for the positioning module to measure the position of the mobile station.

6. An information analyzing apparatus communicably connected with a radio network controller that controls a base transceiver station controlling a sector in which a mobile station is located, the information analyzing apparatus comprising:
a receiver that receives location information as information regarding a position of the mobile station that the radio network controller measures in response to a given trigger event, identification information as an identifier that makes the mobile station uniquely identifiable, and time information as information regarding a time when the radio network controller measures the position of the mobile station;
a location calculation module that calculates location information regarding a location in which the mobile station is located at a given time based on the location information, the identification information, and the time information; and
an output module that calculates distribution information by integrating the calculated location information and outputs the distribution information thus calculated.

7. An information analyzing method executed in a communication system constituted to comprise: a mobile station that is located in a sector that a base transceiver station controls; a radio network controller that controls the base transceiver station; and an information analyzing apparatus that is communicably connected with the radio network controller, the information analyzing method comprising:
a positioning step in which the radio network controller measures a position of the mobile station in response to a given trigger event;
a transmitting step in which the radio network controller transmits location information as information regarding the position of the mobile station that is measured at the positioning step, identification information as an identifier that makes the mobile station uniquely identifiable, and time information as information regarding a time when the position of the mobile station is measured at the positioning step, to the information analyzing apparatus;
a location calculating step in which the information analyzing apparatus calculates location information regarding a location in which the mobile station is located at a given time based on the location information, the identification information, and the time information; and
an outputting step in which the information analyzing apparatus calculates distribution information by integrating the calculated location information and outputs the distribution information thus calculated.
